# EUROPEAN PATENT APPLICATION

(11) **EP 4 792 976 A1**
(43) Date of publication of application: **19.08.2026**
(21) Application number: 23955448.8
(22) Date of filing: 12.10.2023
(51) Int. Cl.: B23Q 17/09, B23B 25/06, B23C 9/00, B23Q 17/00, G05B 19/4063

(54) **PROCESSING DEVICE, PROCESSING SYSTEM, COMPUTER PROGRAM, AND PROCESSING METHOD**

(71) Applicant: Sumitomo Electric Industries, Ltd., Osaka-shi, Osaka 541-0041 (JP)
(72) Inventor: TOYOSHIMA, Akihiro, Osaka-shi, Osaka 541-0041 (JP)
(74) Representative: Boult Wade Tennant LLP
(86) International application number: PCT/JP2023/037018
(87) International publication number: WO 2025/079200

(57) **Abstract**

A processing apparatus includes: a reception unit configured to receive sensor data from a sensor provided to a cutting tool; a correction unit configured to, with respect to the sensor data received by the reception unit, correct variation in data caused by heat generation during machining using the cutting tool; and a display processing unit configured to display, in time series, correction data being sensor data obtained through correction performed by the correction unit.

## Description

### TECHNICAL FIELD

The present disclosure relates to a processing apparatus, a processing system, a computer program, and a processing method.

### BACKGROUND ART

A cutting tool is used in cutting machining of a workpiece. With respect to such cutting tools, conventionally, a cutting tool provided with a sensor has been known. PATENT LITERATURE 1 described later discloses a cutting machining system using such a cutting tool.

The cutting machining system described in PATENT LITERATURE 1 includes a machining device body that performs cutting machining by using a cutting tool, a measurement data acquisition device, and an information processing apparatus. The cutting tool is provided with a plurality of strain sensors that each measure a strain caused by cutting resistance during cutting machining. The measurement data acquisition device acquires pieces of sensor data from the plurality of strain sensors provided to the cutting tool. The information processing apparatus receives the pieces of sensor data from the plurality of strain sensors via the measurement data acquisition device, and obtains a deflection of the cutting tool caused by cutting resistance during cutting machining, based on the received pieces of sensor data. The information processing apparatus further obtains a machining error, based on the deflection of the cutting tool, and controls the machining device body so as to correct this machining error.

### CITATION LIST

### PATENT LITERATURE

PATENT LITERATURE 1: Japanese Laid-Open Patent Publication No. 2019-209420

### SUMMARY OF THE INVENTION

A processing apparatus according to an aspect of the present disclosure includes: a reception unit configured to receive sensor data from a sensor provided to a cutting tool; a correction unit configured to, with respect to the sensor data received by the reception unit, correct variation in data caused by heat generation during machining using the cutting tool; and a display processing unit configured to display, in time series, correction data being sensor data obtained through correction performed by the correction unit.

The present disclosure can be realized not only as a processing apparatus, a processing system, a computer program, and a processing method that include such a characteristic configuration, but also as another system, device, method, or computer program that includes a processing apparatus, a processing system, a computer program, or a processing method.

### BRIEF DESCRIPTION OF DRAWINGS

[FIG. 1] FIG. 1 is a diagram for describing a configuration example of a processing system according to a first embodiment.
[FIG. 2] FIG. 2 shows a state where a cutting tool shown in FIG. 1 is mounted to a machine tool.
[FIG. 3] FIG. 3 shows a configuration example of the cutting tool including a sensor module shown in FIG. 1.
[FIG. 4] FIG. 4 is a block diagram showing an example of a hardware configuration of the sensor module.
[FIG. 5] FIG. 5 is a block diagram showing an example of a hardware configuration of a wireless receiver forming a processing apparatus shown in FIG. 1.
[FIG. 6] FIG. 6 is a block diagram showing an example of a hardware configuration of a terminal apparatus forming the processing apparatus shown in FIG. 1.
[FIG. 7] FIG. 7 is a block diagram showing an example of a functional configuration of the processing apparatus shown in FIG. 1.
[FIG. 8] FIG. 8 shows an example of a screen displayed on a display device.
[FIG. 9] FIG. 9 shows an example of a screen displayed on the display device.
[FIG. 10] FIG. 10 is a flowchart showing an example of a control structure of a program executed in the processing apparatus shown in FIG. 1.
[FIG. 11] FIG. 11 is a flowchart showing an example of a control structure of a program executed in the processing apparatus shown in FIG. 1.
[FIG. 12] FIG. 12 is a detailed flow of step S1120 in FIG. 11.
[FIG. 13] FIG. 13 is a detailed flow of step S1140 in FIG. 11.
[FIG. 14] FIG. 14 is a block diagram showing an example of a functional configuration of a processing apparatus according to a second embodiment.
[FIG. 15] FIG. 15 shows an example of a screen displayed on the display device.
[FIG. 16] FIG. 16 is a diagram for describing a detection process of a starting point and an ending point.
[FIG. 17] FIG. 17 is a flowchart showing an example of a control structure of a program executed in the processing apparatus according to the second embodiment.
[FIG. 18] FIG. 18 is a detailed flow of step S1400 in FIG. 17.
[FIG. 19] FIG. 19 is a detailed flow of step S1410 in FIG. 17.
[FIG. 20] FIG. 20 is a flowchart showing an example of a control structure of a program executed in a processing apparatus according to a third embodiment.
[FIG. 21] FIG. 21 is a detailed flow of step S1700 in FIG. 20.
[FIG. 22] FIG. 22 is a block diagram showing an example of a functional configuration of a processing apparatus according to a fourth embodiment.
[FIG. 23] FIG. 23 is a block diagram showing an example of a hardware configuration of a sensor module in a cutting tool according to the fourth embodiment.
[FIG. 24] FIG. 24 is a flowchart showing an example of a control structure of a program executed in the processing apparatus according to the fourth embodiment.
[FIG. 25] FIG. 25 is a block diagram showing an example of a functional configuration of a processing apparatus according to a fifth embodiment.
[FIG. 26] FIG. 26 shows a configuration example of a cutting tool according to a modification.

### DETAILED DESCRIPTION

### [Problems to be solved by the present disclosure]

During machining of a workpiece using a cutting tool, heat is generated at the machining point of the cutting edge of the cutting tool. When this heat is propagated to the sensor, variation may be caused in the output value (data) of the sensor due to temperature change caused by the heat generation. The variation in the output value increases in proportion to the amount of heat that is propagated to the sensor. Therefore, in dry machining using no coolant, heat at the machining point is always generated, and thus, influence of the heat generation on the output value of the sensor increases.

If variation is caused in the output value due to heat generation during machining, when change during cutting machining is to be understood based on the sensor data from the sensor mounted to the cutting tool, it is difficult to grasp the situation during cutting machining. Such a problem cannot be solved by the technology described in PATENT LITERATURE 1.

The present disclosure has been made in order to solve such a problem. An object of the present disclosure is to provide a processing apparatus, a processing system, a computer program, and a processing method that can make it easier to grasp the situation during machining even when variation in the output value has been caused due to heat generation during machining.

### [Effects of the present disclosure]

According to the present disclosure, it is possible to provide a processing apparatus, a processing system, a computer program, and a processing method that can make it easier to grasp the situation during machining even when variation in the output value has been caused due to heat generation during machining.

### [Description of embodiment of the present disclosure]

Suitable embodiments of the present disclosure will be listed and described. At least some of the embodiments described below may be combined as desired.
(1) A processing apparatus according to a first aspect of the present disclosure includes: a reception unit configured to receive sensor data from a sensor provided to a cutting tool; a correction unit configured to, with respect to the sensor data received by the reception unit, correct variation in data caused by heat generation during machining using the cutting tool; and a display processing unit configured to display, in time series, correction data being sensor data obtained through correction performed by the correction unit.
   With respect to the sensor data received by the reception unit, the correction unit corrects variation in data caused by heat generation during machining using the cutting tool. The display processing unit displays, in time series, correction data being sensor data obtained through correction performed by the correction unit. In the correction data displayed in time series, influence of heat generation on the sensor data (output value of the sensor) has been corrected by the correction unit. Therefore, even when variation has been caused in the output value due to heat generation during machining, the situation during machining can be easily grasped.
(2) In (1) above, the processing apparatus may further include a storage device configured to store the sensor data received by the reception unit. The display processing unit may further read out the sensor data stored in the storage device and display the sensor data in time series. With respect to the sensor data displayed in time series, the correction unit may correct variation in data caused by heat generation during machining using the cutting tool. Accordingly, the situation during machining can be more easily grasped.
(3) In (1) or (2) above, the sensor data may include a measurement value measured by the sensor. The correction unit may correct variation in data caused by heat generation during machining using the cutting tool, based on a change amount of the measurement value per unit time caused by heat generation. Accordingly, variation in data caused by heat generation during machining using the cutting tool can be easily corrected.
(4) In (3) above, the sensor data may include first non-machining-time data before cutting machining, machining-time data during cutting machining, and second non-machining-time data after cutting machining, and the processing apparatus may further include a setting unit configured to set a starting point for the first non-machining-time data and set an ending point for the second non-machining-time data. The correction unit may calculate the change amount per unit time, based on the starting point and the ending point set by the setting unit, and correct variation in data caused by heat generation during machining using the cutting tool, based on the calculated change amount. Accordingly, variation in data caused by heat generation during machining using the cutting tool can be more easily corrected.
(5) In (4) above, the setting unit may include an acceptance unit configured to accept a setting input of the starting point and the ending point. Accordingly, setting of the starting point and the ending point becomes easy.
(6) In (4) above, the setting unit may include a detection unit configured to detect and set the starting point and the ending point. Also with this, the starting point and the ending point can be easily set.
(7) In (6) above, while moving a predetermined time range in the sensor data, the detection unit may compare a statistic amount of data in each said time range with a predetermined threshold, and detect the starting point and the ending point, based on whether or not the statistic amount exceeds the predetermined threshold. Accordingly, the starting point and the ending point can be easily detected and set.
(8) In (2) above, the display processing unit may execute a first display process of displaying, on a display device, a first screen including the sensor data displayed in time series and a correction button. The correction unit may execute a process of correcting the variation on the sensor data, in response to the correction button having been operated. The display processing unit may further execute a second display process of displaying, on the display device, a second screen including the correction data being sensor data obtained through correction performed by the correction unit. Accordingly, after the sensor data before being corrected is displayed, the correction data obtained through correction is displayed. Thus, the situation during machining can be even more easily grasped.
(9) In (1) above, with respect to the sensor data received by the reception unit, the correction unit may correct, in real time, variation in data caused by heat generation during machining using the cutting tool, and the display processing unit may display, in real time in time series, the correction data obtained through correction performed by the correction unit. Accordingly, the situation during machining can be easily grasped in real time.
(10) In (9) above, the sensor data may include temperature information during machining using the cutting tool, and a strain amount. The processing apparatus may retain, in advance, information associated with temperature information during machining, a strain amount, and a variation component of a strain amount caused by heat generation during machining. The correction unit may correct the strain amount of the sensor data, based on the temperature information of the sensor data and the information retained in advance. Accordingly, variation in data caused by heat generation during machining using the cutting tool can be easily corrected in real time.
(11) In (9) above, the correction unit may correct, in real time through filter processing, variation in data caused by heat generation during machining using the cutting tool. Also with this, variation in data caused by heat generation during machining using the cutting tool can be easily corrected in real time.
(12) A processing system according to a second aspect of the present disclosure includes: a cutting tool including a sensor and a transmission unit configured to transmit sensor data from the sensor; and a processing apparatus configured to receive sensor data transmitted from the cutting tool and execute a predetermined process. The processing apparatus includes: a reception unit configured to receive sensor data from the sensor provided to the cutting tool; a correction unit configured to, with respect to the sensor data received by the reception unit, correct variation in data caused by heat generation during machining using the cutting tool; and a display processing unit configured to display, in time series on a display device, correction data being sensor data obtained through correction performed by the correction unit. With this configuration, even when variation has been caused in the output value due to heat generation during machining, the situation during machining can be easily grasped.
(13) A computer program according to a third aspect of the present disclosure is for causing a computer to process sensor data transmitted from a cutting tool. The computer program causes the computer to function as: a reception unit configured to receive sensor data from a sensor provided to the cutting tool; a correction unit configured to, with respect to the sensor data received by the reception unit, correct variation in data caused by heat generation during machining using the cutting tool; and a display processing unit configured to display, in time series on a display device, correction data being sensor data obtained through correction performed by the correction unit. With this configuration, even when variation has been caused in the output value due to heat generation during machining, the situation during machining can be easily grasped.
(14) A processing method according to a fourth aspect of the present disclosure is for processing sensor data transmitted from a cutting tool. The processing method includes the steps, performed by a computer, of: receiving sensor data from a sensor provided to the cutting tool; correcting, with respect to the sensor data received in the receiving, variation in data caused by heat generation during machining using the cutting tool; and displaying, in time series, correction data being sensor data obtained through correction performed in the correcting. With this configuration, even when variation has been caused in the output value due to heat generation during machining, the situation during machining can be easily grasped.

### [Details of embodiments of the present disclosure]

Hereinafter, specific examples of a processing apparatus, a processing system, a computer program, and a processing method according to embodiments of the present disclosure will be described with reference to the drawings. In the following embodiments, the same components and the like are denoted by the same reference signs. The functions and the names thereof are also the same. Therefore, description thereof is not repeated.

### (First embodiment)

### [Overall configuration]

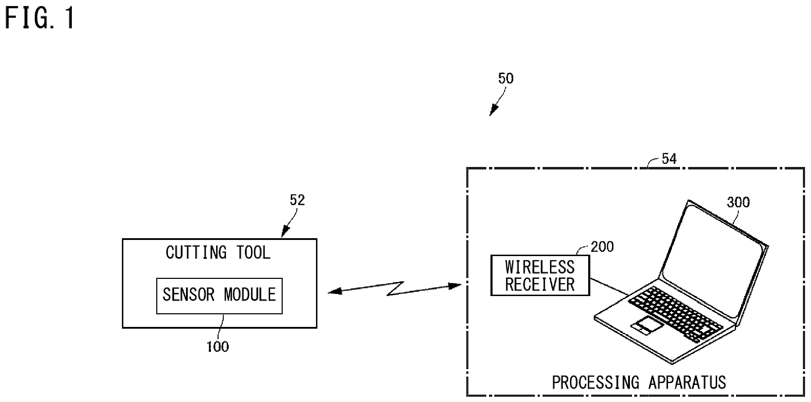

With reference to FIG. 1, a processing system 50 according to the present embodiment includes a cutting tool 52 and a processing apparatus 54. The cutting tool 52 includes a sensor module 100. The sensor module 100 has a function of measuring a load and the like applied to the cutting tool 52 during cutting machining using the cutting tool 52, and of wirelessly transmitting the measurement data (hereinafter, this may be referred to as "sensor data") to the outside. The processing apparatus 54 includes a device that processes sensor data transmitted from the cutting tool 52. This processing apparatus 54 includes a wireless receiver 200 capable of performing wireless communication with the cutting tool 52 (the sensor module 100), and a terminal apparatus 300 connected to the wireless receiver 200. The wireless receiver 200 functions as a reception unit that receives sensor data transmitted from the cutting tool 52 (the sensor module 100). The terminal apparatus 300 includes a computer that executes processes of acquiring sensor data via the wireless receiver 200 and displaying the sensor data.

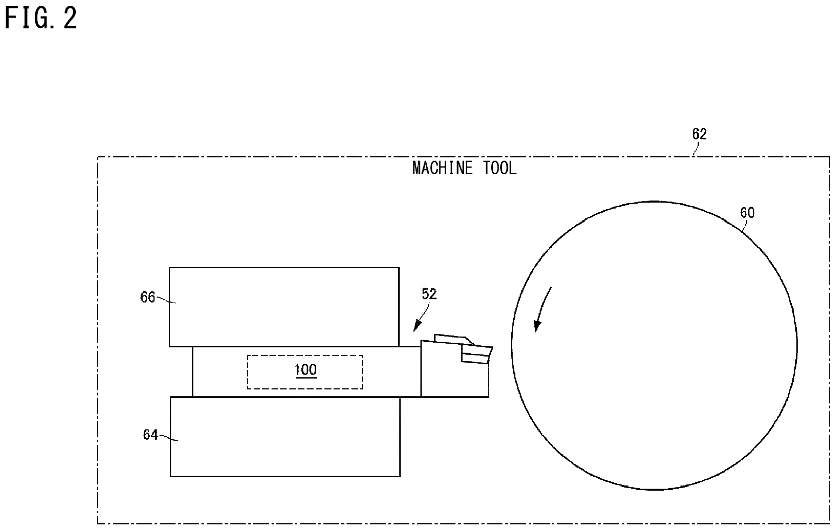

With reference to FIG. 2, in the present embodiment, the cutting tool 52 is a turning tool that is used in machining a rotating workpiece 60. The cutting tool 52 is mounted to a machine tool 62 such as a lathe. Specifically, the cutting tool 52 is sandwiched and fixed from above and below by tool rests 64 and 66 in the machine tool 62.

### [Configuration of cutting tool 52]

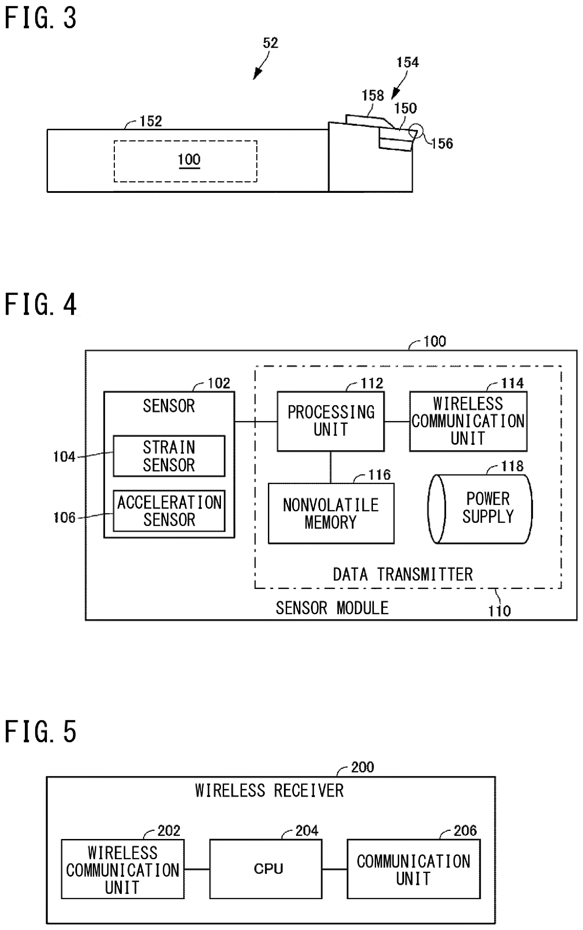

With reference to FIG. 3, the cutting tool 52 includes a holder 152 that holds a cutting insert 150 at an end portion thereof. A head part 154 to which the cutting insert 150 is fixed is provided at the end portion of the holder 152. The cutting insert 150 has a cutting edge 156 at the tip thereof, and is detachably fixed to the head part 154 by a fixing member 158. The sensor module 100 is provided inside the holder 152. Each sensor included in the sensor module 100 is mounted at an appropriate position in the holder 152.

### (Hardware configuration of sensor module 100)

With reference to FIG. 4, the sensor module 100 includes: a sensor 102 that measures a load and the like applied to the cutting tool 52; and a data transmitter 110 that transmits sensor data measured by the sensor 102 to the outside. The sensor module 100 is activated by an operation by a user, for example.

The sensor 102 includes a strain sensor 104 and an acceleration sensor 106. The number of the strain sensors 104 and the acceleration sensors 106 is not particularly limited. The number of the strain sensors 104 and the acceleration sensors 106 may be one or may be plural. The sensor 102 may include only the strain sensor 104 without including the acceleration sensor 106. The sensor module 100 may further include other sensors such as a pressure sensor and a displacement sensor, instead of the acceleration sensor 106 or in addition to the acceleration sensor 106. The sensor 102 is electrically connected to the data transmitter 110, and the output of each sensor is transmitted to the data transmitter 110.

The data transmitter 110 includes a processing unit 112, a wireless communication unit 114, a nonvolatile memory 116, and a power supply 118. The processing unit 112 includes a processor such as a CPU (Central Processing Unit) or a DSP (Digital Signal Processor). The processor may be a hardware circuit composed of an ASIC (Application Specific Integrated Circuit).

The processing unit 112 generates information indicated by a measurement value of the sensor 102. Specifically, the processing unit 112 performs AD (Analog Digital) conversion on an analog signal received from each of the strain sensor 104 and the acceleration sensor 106 at a sampling timing in a predetermined cycle. The processing unit 112 outputs, to the wireless communication unit 114, sensor data including a sensor measurement value being a digital value obtained through conversion.

The wireless communication unit 114 includes a communication circuit such as a communication IC (Integrated Circuit). The wireless communication unit 114 has a function as a transmission unit that transmits, under control of the processing unit 112, a packet generated from the sensor data received from the processing unit 112, to the wireless receiver 200 (see FIG. 1).

The nonvolatile memory 116 is connected to the processing unit 112, and stores a program and the like executed by the processing unit 112. The nonvolatile memory 116 may have a function as a buffer memory that temporarily stores sensor data. The power supply 118 includes a battery that supplies power to the processing unit 112, the wireless communication unit 114, and the nonvolatile memory 116.

### [Configuration of processing apparatus 54]

### (Hardware configuration of wireless receiver 200)

With reference to FIG. 5, the wireless receiver 200 includes a wireless communication unit 202 capable of performing wireless communication with the wireless communication unit 114 shown in FIG. 4, a CPU 204 connected to the wireless communication unit 202, and a communication unit 206 connected to the CPU 204. The communication unit 206 performs communication with the terminal apparatus 300 (see FIG. 1). The communication between the communication unit 206 and the terminal apparatus 300 (see FIG. 1) may be wired communication or may be wireless communication.

### (Hardware configuration of terminal apparatus 300)

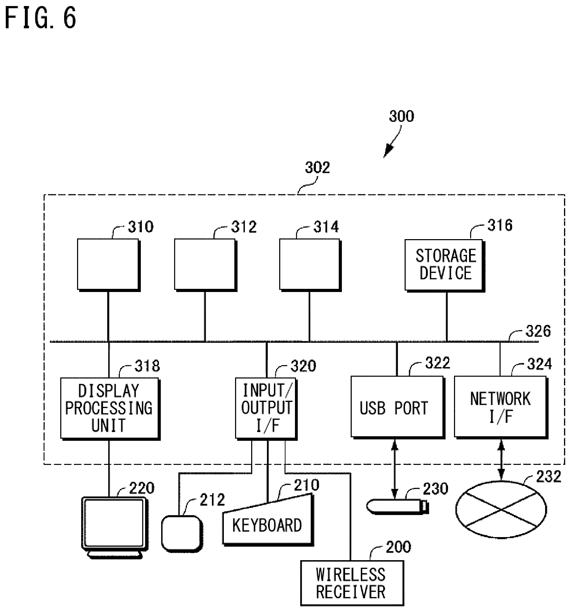

With reference to FIG. 6, the terminal apparatus 300 includes a computer 302. A keyboard 210, a touch pad 212, and a display device 220 are connected to the computer 302. The computer 302 includes a CPU 310, a ROM (Read Only Memory) 312, a RAM (Random Access Memory) 314, a storage device 316, a display processing unit 318, an input/output I/F (Interface) 320, a USB (Universal Serial Bus) port 322, and a network I/F 324. The CPU 310, the ROM 312, the RAM 314, the storage device 316, the display processing unit 318, the input/output I/F 320, the USB port 322, and the network I/F 324 are each connected to a bus 326, and data exchange therebetween is performed via the bus 326.

The ROM 312 stores a boot up program and the like of the computer 302. The RAM 314 stores commands forming a program used at the time of execution, a system program, a system state, work data, and the like. The storage device 316 includes a nonvolatile memory such as an SSD (Solid State Drive). The storage device 316 is a non-transitory storage medium for storing a program executed by the CPU 310, data used by the program executed by the CPU 310, and the like.

The display processing unit 318 performs display using the display device 220 in accordance with control by the CPU 310. Peripheral devices are connected to the input/output I/F 320. For example, the keyboard 210, the touch pad 212, and the wireless receiver 200 are connected to the input/output I/F 320. For example, a USB memory 230 is detachably connected to the USB port 322. The USB port 322 provides communication between the connected USB memory 230 and each component in the computer 302. The network I/F 324 provides connection to a network 232 that enables communication with another terminal.

A program and the like that realize the processing apparatus 54 (the terminal apparatus 300) according to the present embodiment are stored in the storage device 316, the RAM 314, the USB memory 230, or a storage medium or the like of an external device (not shown) connected to the bus 326 via the network I/F 324 and the network 232. Typically, these pieces of data, parameters, and the like are written into the storage device 316 from outside, for example, and are loaded onto the RAM 314 at the time of execution performed by the computer 302.

The computer program and the like that realize the processing apparatus 54 (the terminal apparatus 300) according to the present embodiment are stored in the USB memory 230, for example, and are transferred to be stored in the storage device 316 in a state where the USB memory 230 is attached to the USB port 322. Alternatively, this program may be transmitted to the computer 302 via the network 232 and the network I/F 324, to be stored in the storage device 316.

### (Functional configuration of processing apparatus 54)

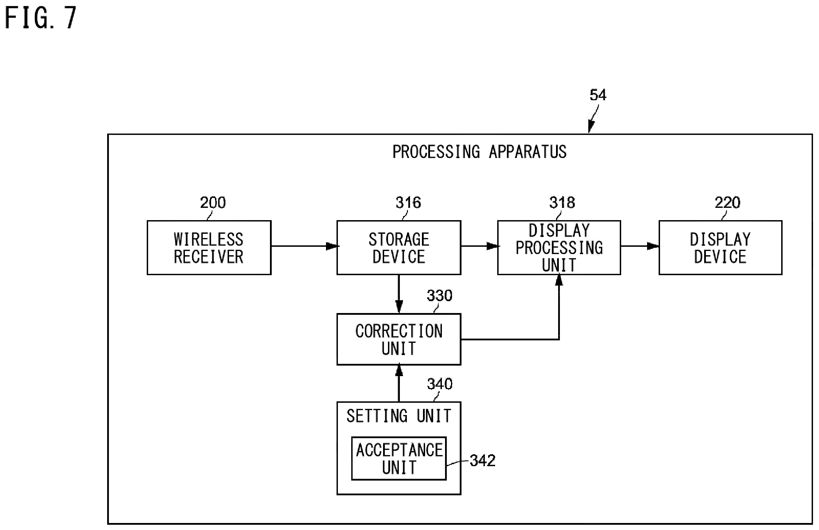

With reference to FIG. 7, the processing apparatus 54 includes, as function units, a correction unit 330 and a setting unit 340, in addition to the wireless receiver 200, the storage device 316, the display processing unit 318, and the display device 220. Sensor data received by the wireless receiver 200 is stored into the storage device 316. The display processing unit 318 reads out sensor data stored in the storage device 316 and displays the sensor data on the display device 220. The functions of these function units are realized by software processing executed by the CPU 310 shown in FIG. 6 using the hardware.

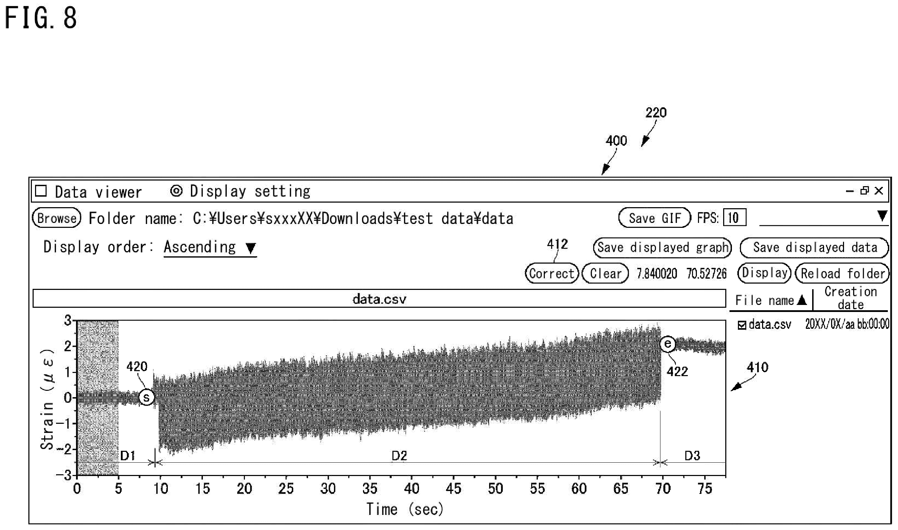

With reference to FIG. 8, a screen 400 is displayed on the display device 220 by the display processing unit 318. The screen 400 includes a graph 410 in which sensor data is displayed in time series, and a correction button 412 for correcting the sensor data. The sensor data in the graph 410 is strain data measured by the strain sensor 104 (see FIG. 4). The horizontal axis of the graph 410 represents time (sec), and the vertical axis of the graph 410 represents strain (µε). The sensor data includes non-machining-time data D1 before cutting machining, machining-time data D2 during cutting machining, and non-machining-time data D3 after cutting machining.

With reference to FIG. 2, during machining of a workpiece 60 using the cutting tool 52, heat is generated at the machining point of the cutting edge 156 (see FIG. 3) of the cutting tool 52. When this heat is propagated to the sensor 102 (see FIG. 4) via the holder 152, variation (hereinafter, this variation may be referred to as "thermal drift") is caused in the output value (measurement value) of the sensor 102 due to temperature change (temperature rise) caused by the heat generation. The thermal drift increases in proportion to the amount of heat propagated to the sensor 102. Therefore, in dry machining using no coolant, heat at the machining point is always generated, and thus, influence of the heat generation on the output value of the sensor 102 increases.

With reference to FIG. 8 again, in the machining-time data D2, due to influence of this thermal drift, the output value is gradually shifted to the upper side in association with lapse of time.

With reference to FIG. 7 again, with respect to the sensor data received by the wireless receiver 200, the correction unit 330 corrects variation in data caused by heat generation during machining using the cutting tool 52. That is, the correction unit 330 executes a process for removing influence of thermal drift. Specifically, assuming that variation in data caused by heat generation during machining linearly changes, the correction unit 330 calculates the slope from the difference between strain values before and after the machining, and subtracts the slope from the strain values, thereby removing the influence of thermal drift.

The setting unit 340 includes an acceptance unit 342 that accepts an input for designing a section for which correction is to be performed. The acceptance unit 342 accepts a designation of respective pieces of time information at two points (correction starting point 420, correction ending point 422) on the graph 410 shown in FIG. 8. The correction starting point may be simply referred to as "starting point" and the correction ending point may be simply referred to as "ending point".

The acceptance of the designation may be performed through a clicking operation performed on the graph 410, or may be performed through a direct input of time information into a text box (not shown). Preferably, the correction starting point 420 is set to the vicinity of (i.e., immediately before the start of machining) the machining-time data D2, in the non-machining-time data D1 before cutting machining. Preferably, the correction ending point 422 is set to the vicinity of (i.e., immediately after the end of machining) the machining-time data D2, in the non-machining-time data D3 after cutting machining.

Based on the inputted time information (the correction starting point 420, the correction ending point 422), the setting unit 340 detects the measurement value at the correction starting point and the measurement value at the correction ending point, and sets the measurement values as starting point data and ending point data, respectively.

The correction unit 330 executes a correction process in accordance with an operation on the correction button 412 performed by the user, and generates correction data being sensor data obtained through correction. The display processing unit 318 displays, in time series on the display device 220, correction data being data obtained through correction performed by the correction unit 330.

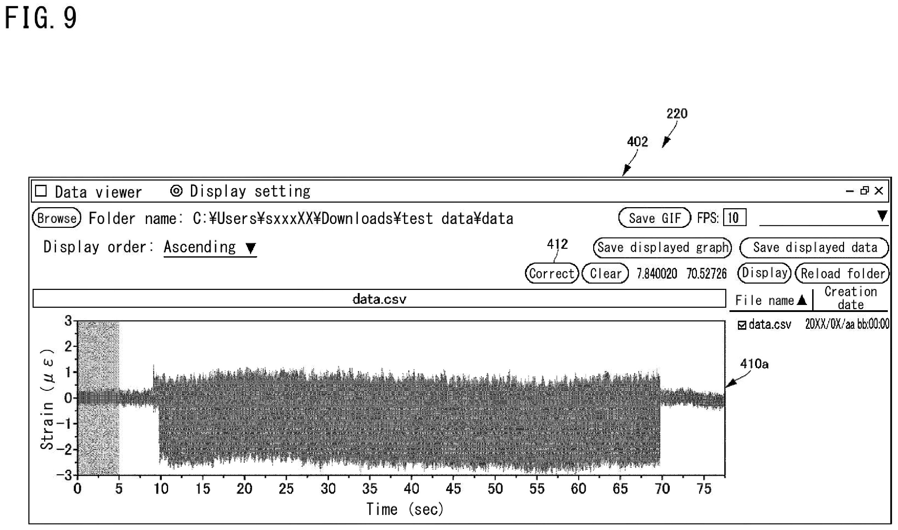

With reference to FIG. 9, a screen 402 after the correction process is displayed on the display device 220 by the display processing unit 318. The screen 402 includes a graph 410a in which the correction data is displayed in time series. In the graph 410a, as in the graph 410 (see FIG. 8), the horizontal axis represents time (sec), and the vertical axis represents strain (µε). In the correction data, the influence of thermal drift has been removed.

### (Method of correction process)

It is assumed that the measurement value of the sensor (the strain sensor 104) is xₙ, the measurement time is tₙ, and the number of pieces of data measured during machining is N. In this case, the data can be expressed as (x₀, t₀), (x₁, t₁), ...,(x_{N}, t_{N}). At this time, if the starting point data at the non-machining-time data D1 before cutting machining is assumed to be (xₛ, tₛ), and the ending point data at the non-machining-time data D3 after cutting machining is assumed to be (xₑ, tₑ), the variation (difference) in the output value due to thermal drift before and after cutting machining becomes xₑ-xₛ. Therefore, the change amount of the measurement value (output value) per unit time due to thermal drift is calculated by formula (1) below.
[Math. 1] $\frac{{x}_{e} - {x}_{s}}{{t}_{e} - {t}_{s}}$

Therefore, the thermal drift correction value of the output value (xₙ, tₙ) in an arbitrary time during cutting machining is calculated by formula (2) below.
[Math. 2] ${x}_{n} - \frac{{x}_{e} - {x}_{s}}{{t}_{e} - {t}_{s}} \times \left({t}_{n}-{t}_{s}\right)$

As for the non-machining-time data D3 after cutting machining, correction by the same amount as the correction performed on the data at the time of end of machining can be performed.

### [Software configuration]

### (Reception of sensor data)

With reference to FIG. 9, a control structure of a computer program executed in the processing apparatus 54 in order to receive and acquire sensor data transmitted from the cutting tool 52 will be described.

This program includes step S1000 in which step S1010 and step S1020 described below are repeated until reception of sensor data is finished. In step S1000, the process repeated until reception of sensor data is finished includes step S1010 of receiving sensor data, and step S1020 of storing the received sensor data into the storage device 316.

### (Correction of sensor data)

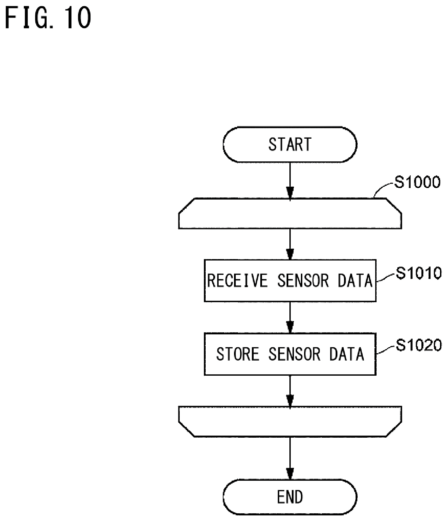

With reference to FIG. 10, a control structure of a computer program executed in the processing apparatus 54 in order to remove influence of thermal drift from the received sensor data will be described.

This program includes: step S1100 of reading out sensor data from the storage device 316 and displaying the sensor data on the display device 220; step S1110, executed after step S1100, of determining whether or not respective pieces of time information at the correction starting point and the correction ending point have been inputted and waiting until the inputting is completed; step S1120, executed when it has been determined in step S1110 that respective pieces of time information at the correction starting point and the correction ending point have been inputted, of detecting starting point data (xₛ, tₛ) and ending point data (xₑ, tₑ), based on the inputted respective pieces of time information; step S1130, executed after step S1120, of determining whether or not the correction button 412 (see FIG. 8) has been operated by the user and waiting until the correction button 412 is operated; step S1140, executed when it has been determined in step S1130 that the correction button 412 has been operated, of executing the correction process on the sensor data; and step S1150, executed after step S1140, of displaying correction data being data obtained through correction, on the display device 220, and ending this program.

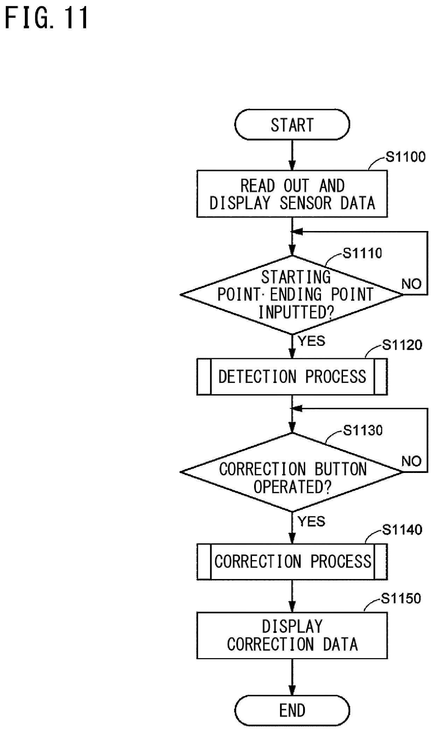

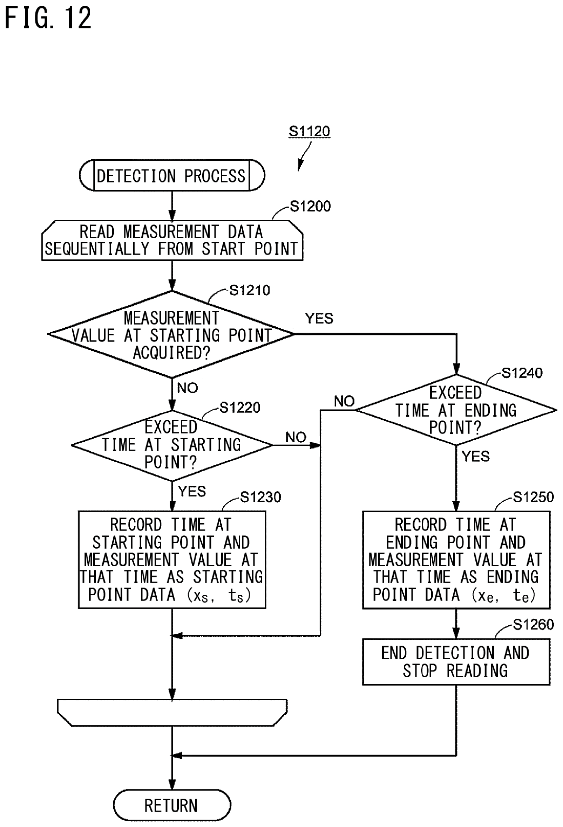

FIG. 12 is a detailed flow of step S1120 in FIG. 11. With reference to FIG. 12, this routine includes step S1200 in which step S1210 to step S1240 described below are repeated while measurement data (sensor data) is sequentially read from the start point. The process repeated in step S1200 includes: step S1210 of determining whether or not the measurement value at the starting point, i.e., the starting point data (xₛ, tₛ), has been acquired (detected), and of branching the flow of the control in accordance with the determination result; step S1220, executed when it has been determined in step S1210 that the starting point data (xₛ, tₛ) has not been acquired, of determining whether or not the time corresponding to the read measurement data exceeds the time at the starting point, and of branching the flow of the control in accordance with the determination result; step S1230, executed when it has been determined in step S1220 that the time corresponding to the read measurement data exceeds the time at the starting point, of recording the time corresponding to the read measurement data and the measurement value at that time as the starting point data (xₛ, tₛ); and step S1240, executed when it has been determined in step S1210 that the starting point data (xₛ, tₛ) has been acquired, of determining whether or not the time corresponding to the read measurement data exceeds the time at the ending point, and of branching the flow of the control in accordance with the determination result. In step S1220, when it has been determined that the time corresponding to the read measurement data does not exceed the time at the starting point, when the process in step S1230 has ended, or when it has been determined in step S1240 that the time corresponding to the read measurement data does not exceed the time at the ending point, the next measurement data is read and the above processes are repeated.

This routine further includes: step S1250, executed when it has been determined in step S1240 that the time corresponding to the read measurement data exceeds the time at the ending point, of recording the time corresponding to the read measurement data and the measurement value at that time as the ending point data (xₑ, tₑ); and step S1260, executed after step S1250, of ending the detection and stopping reading of the measurement data to end this routine.

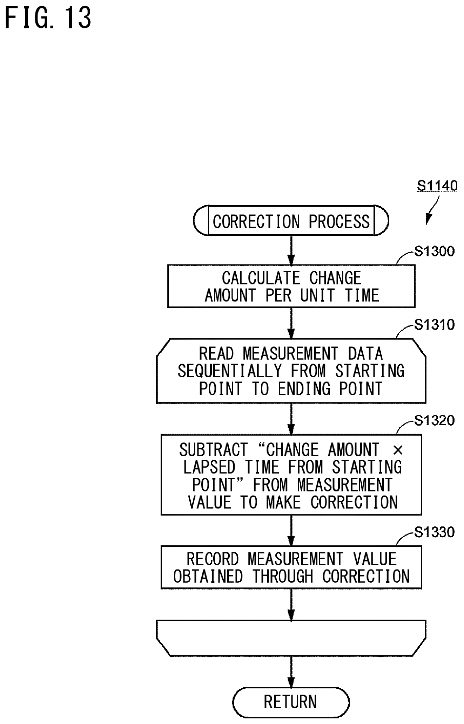

FIG. 13 is a detailed flow of step S1140 in FIG. 11. With reference to FIG. 13, this routine includes: step S1300 of calculating the change amount of the measurement value (hereinafter, this may be referred to as "data") per unit time by the above formula (1), by using the starting point data (xₛ, tₛ) and the ending point data (xₑ, tₑ); and step S1310 which is executed after step S1300 and in which step S1320 and step S1330 described below are repeated while measurement data from the starting point to the ending point is sequentially read. The process repeated in step S1310 includes: step S1320 of subtracting "change amount × lapsed time from starting point" from the measurement value (strain value) to make correction; and step S1330, executed after step S1320, of storing the measurement value obtained through the correction, together with time information. In step S1320, the measurement value is corrected by the above formula (2).

### [Operation]

The processing system 50 according to the present embodiment operates as follows. With reference to FIG. 1, in cutting machining using the cutting tool 52, sensor data measured by the sensor module 100 is transmitted from the cutting tool 52 (the sensor module 100) to the processing apparatus 54. The processing apparatus 54 receives the sensor data from the sensor provided to the cutting tool 52, via the wireless receiver 200 (step S1010 in FIG. 10). The processing apparatus 54 (the terminal apparatus 300) stores the received sensor data into the storage device 316 (step S1020 in FIG. 10).

In accordance with an operation by the user, the terminal apparatus 300 reads out the sensor data stored in the storage device 316, and displays the sensor data on the display device 220 (step S1100 in FIG. 11). The screen 400 as shown in FIG. 8 is displayed on the display device 220, for example. The graph 410 in which the sensor data is displayed in time series is displayed on the screen 400.

As described above, during cutting machining, thermal drift in which the output value of the sensor varies due to heat generated at the machining point of the cutting edge 156 of the cutting tool 52 may be caused. In the graph 410 shown in FIG. 8, under the influence of thermal drift, the sensor data has been shifted to the upper side in association with lapse of time.

The processing apparatus 54 (the terminal apparatus 300) executes the correction process for removing the influence of thermal drift. Specifically, first, the terminal apparatus 300 accepts an input, performed by the user, of respective pieces of time information at the correction starting point 420 and the correction ending point 422. For example, the user designates the correction starting point 420 and the correction ending point 422 on the graph 410. When having accepted the input, performed by the user, of respective pieces of time information at the correction starting point 420 and the correction ending point 422 (YES in step S1110 in FIG. 11), the terminal apparatus 300 detects the starting point data (xₛ, tₛ) and the ending point data (xₑ, tₑ), based on the inputted time information at the correction starting point 420 and the inputted time information at the correction ending point 422 (step S1120 in FIG. 11 and FIG. 12).

When the correction button 412 (see FIG. 8) has been pressed by the user (YES in step S1130 in FIG. 11), the correction process for removing the influence of thermal drift is executed on the sensor data, based on the starting point data (xₛ, tₛ) and the ending point data (xₑ, tₑ) having been detected (step S1140 in FIG. 11 and FIG. 12). The terminal apparatus 300 displays, on the display device 220, correction data being sensor data obtained through correction (step S1150). Specifically, on the display device 220, the screen 402 as shown in FIG. 9 is displayed, for example.

In the present embodiment, as described above, with respect to the sensor data received by the wireless receiver 200, the correction unit 330 corrects variation in data caused by heat generation during machining using the cutting tool 52. The display processing unit 318 displays, in time series, correction data being sensor data obtained through correction performed by the correction unit 330. In the correction data displayed in time series, the influence of heat generation on the sensor data (output value of the sensor) has been corrected by the correction unit 330. Therefore, even when variation has been caused in the output value due to heat generation during machining, the situation during machining can be easily grasped. As a result, for example, setting of machining conditions or improvement of steps, and the like can be facilitated.

The processing apparatus 54 further includes the storage device 316 that stores the sensor data received by the wireless receiver 200. The display processing unit 318 reads out the sensor data stored in the storage device 316 and displays the sensor data in time series. With respect to the sensor data displayed in time series, the correction unit 330 corrects variation in data caused by heat generation during machining using the cutting tool 52. Accordingly, the situation during machining can be more easily grasped.

The correction unit 330 corrects variation in data caused by heat generation during machining using the cutting tool 52, based on the change amount of data per unit time caused by heat generation. Accordingly, variation in data caused by heat generation during machining using the cutting tool 52 can be easily corrected.

The sensor data includes the non-machining-time data D1 before cutting machining, the machining-time data D2 during cutting machining, and the non-machining-time data D3 after cutting machining. The processing apparatus 54 includes the setting unit 340 that sets the starting point for the non-machining-time data D1 and sets the ending point for the non-machining-time data D3. The correction unit 330 calculates the change amount of the data per unit time, based on the starting point and the ending point set by the setting unit 340, and corrects variation in data caused by heat generation during machining using the cutting tool 52, based on the calculated change amount. Accordingly, variation in data caused by heat generation during machining using the cutting tool 52 can be more easily corrected.

The setting unit 340 includes the acceptance unit 342 that accepts an input for setting the starting point and the ending point. Accordingly, setting of the starting point and the ending point becomes easy.

The display processing unit 318 executes a first display process of displaying, on the display device 220, the screen 400 including the sensor data displayed in time series and the correction button 412. The correction unit 330 executes a process of correcting variation on the sensor data, in response to the correction button 412 having been operated. The display processing unit 318 further executes a second display process of displaying, on the display device 220, the screen 402 including correction data being sensor data obtained through correction performed by the correction unit 330. Accordingly, after the sensor data before being corrected is displayed, the correction data obtained through correction is displayed, and thus, the situation during machining can be even more easily grasped.

### (Second embodiment)

The processing system according to the present embodiment is different from the first embodiment in which an input of the correction range by the user is accepted, in that the correction range of the sensor data is automatically detected. The other configurations are the same as those in the first embodiment.

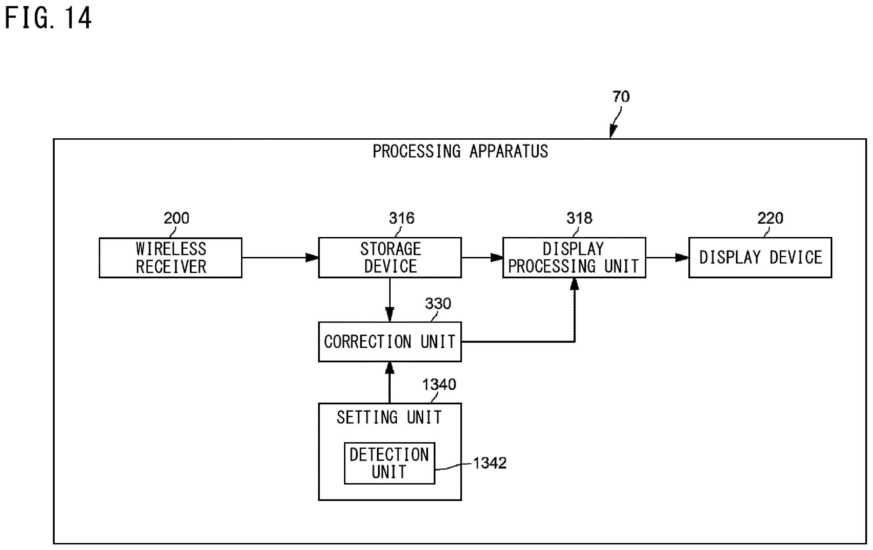

With reference to FIG. 14, the processing system according to the present embodiment includes a processing apparatus 70 instead of the processing apparatus 54 (see FIG. 7). The processing apparatus 70 includes a setting unit 1340 as a function unit, instead of the setting unit 340 (see FIG. 7). The setting unit 1340 includes a detection unit 1342 that detects and sets the correction starting point and the correction ending point in sensor data (measurement data).

While moving a predetermined time range in sensor data, the detection unit 1342 compares a statistic amount of data in each time range with a predetermined threshold, and detects the starting point and the ending point, based on whether or not the statistic amount exceeds a predetermined threshold. The predetermined time range is set as a Window width, and the movement amount of the predetermined time range is set as a Step width.

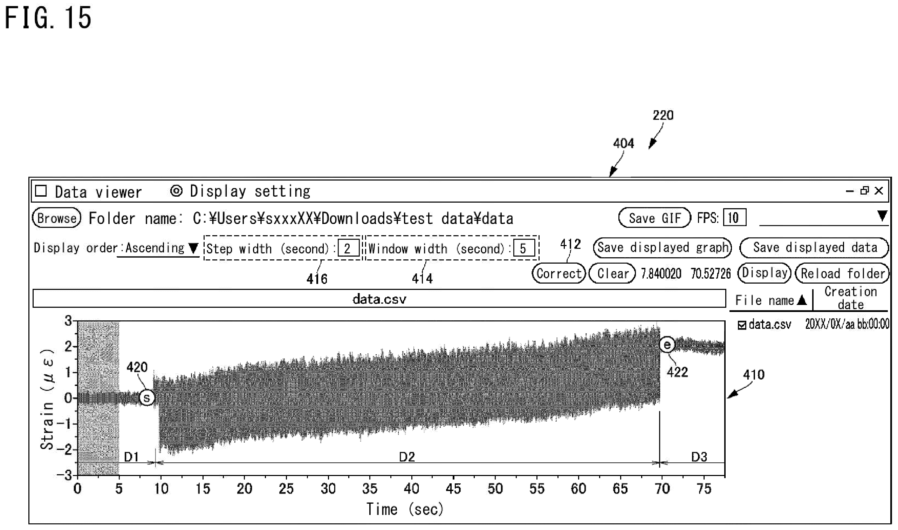

The sensor data received from the cutting tool is displayed, on the display device 220, on a screen 404 shown in FIG. 15, for example. With reference to FIG. 15, the screen 404 includes a Window width input field 414 into which a set value for the Window width (second) is inputted, and a Step width input field 416 into which a set value for the Step width (second) is inputted, in addition to the graph 410 in which the sensor data is displayed in time series and the correction button 412.

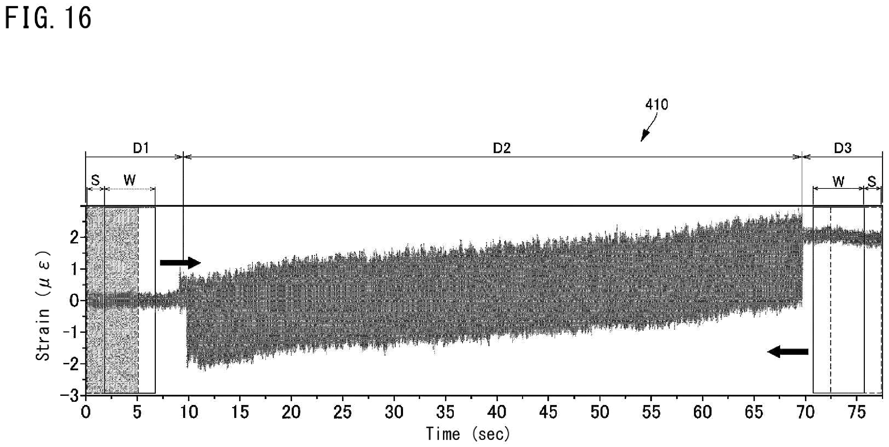

With reference to FIG. 16, detection of the correction starting point 420 is performed while moving a Window width W in a unit of Step width S in the forward direction from the start point side of the sensor data. Specifically, the processing apparatus 70 (the detection unit 1342) calculates a statistic amount with respect to the measurement values in the range of the Window width W, and determines whether or not the calculated statistic amount exceeds a predetermined threshold. When the statistic amount does not exceed the threshold, the Window width W is moved by the Step width S in the forward direction, and the same process is repeated. When the calculated statistic amount exceeds the predetermined threshold, predetermined time information (e.g., the time at the center in the Window width W) in the Window width W at that time is defined as a time (tₛ) for the correction starting point 420, and a measurement value corresponding to the time information is defined as a measurement value (xₛ) at the correction starting point 420, whereby the starting point data (xₛ, tₛ) is acquired.

Meanwhile, detection of the correction ending point 422 is performed while moving the Window width W in a unit of the Step width S in the reverse direction from the end point side of the sensor data. Specifically, the processing apparatus 70 (the detection unit 1342) calculates a statistic amount with respect to the measurement values in the range of the Window width W, and determines whether or not the calculated statistic amount exceeds a predetermined threshold. When the statistic amount does not exceed the threshold, the Window width W is moved by the Step width S in the reverse direction, and the same process is repeated. When the calculated statistic amount exceeds the predetermined threshold, predetermined time information (e.g., the time at the center in the Window width W) in the Window width W at that time is defined as a time (tₑ) for the correction ending point 422, and the measurement value corresponding to the time information is defined as a measurement value (xₑ) at the correction ending point 422, whereby the ending point data (xₑ, tₑ) is acquired.

The statistic amount can be a variance value, for example. However, the statistic amount may be any of an average value, a variance value, a maximum value, a minimum value, or the like. That the statistic amount exceeds a threshold includes both a case where the statistic amount exceeds to the positive (+) side and a case where the statistic amount exceeds to the negative (-) side. That is, depending on the statistic amount, there may be a case where whether or not the statistic amount exceeds the threshold to the positive (+) side is determined, or a case where whether or not the statistic amount exceeds the threshold to the negative (-) side is determined.

### [Software configuration]

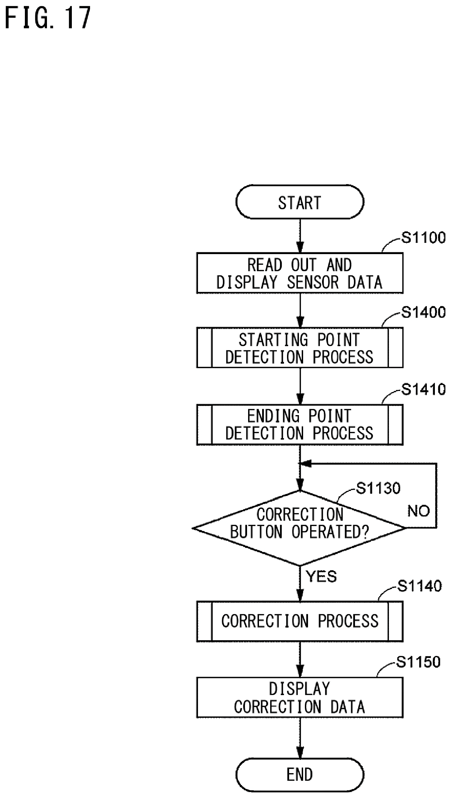

In the processing apparatus 70 according to the present embodiment, a program shown in FIG. 17 is executed instead of the program shown in FIG. 11. The program in FIG. 17 includes step S1400 and step S1410 instead of step S1110 and step S1120 in the program in FIG. 11. The processes in step S1100, and step S1130 to step S1150 in FIG. 17 are the same as the processes in the steps shown in FIG. 11. Hereinafter, differences will be described.

With reference to FIG. 17, this program includes: step S1400, executed after step S1100, of executing a starting point detection process; and step S1410, executed after step S1400, of executing an ending point detection process. When the process in step S1410 has ended, the control proceeds to step S1130.

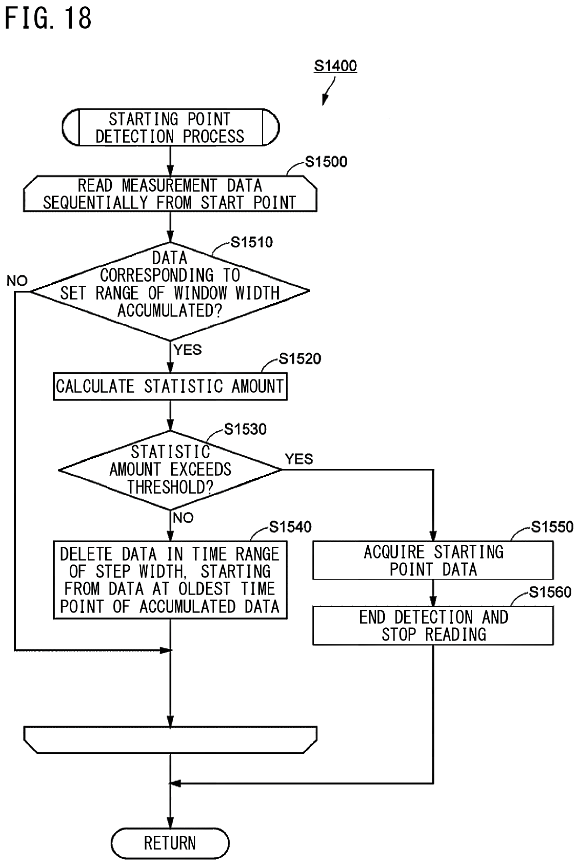

FIG. 18 is a detailed flow of step S1400 in FIG. 17. With reference to FIG. 18, this routine includes step S1500 in which step S1510 to step S1540 described below are repeated while measurement data (sensor data) is sequentially read from the start point. The process repeated in step S1500 includes: step S1510 of determining whether or not data corresponding to the set range of the Window width has been accumulated in a predetermined region of the memory, and of branching the flow of the control in accordance with the determination result; step S1520, executed when it has been determined in step S1510 that data corresponding to the set range of the Window width has been accumulated, of calculating a statistic amount of the data corresponding to the set range of the Window width; step S1530, executed after step S1520, of determining whether or not the calculated statistic amount exceeds a predetermined threshold, and of branching the flow of the control in accordance with the determination result; and step S1540, executed when it has been determined in step S1530 that the statistic amount does not exceed the predetermined threshold, of deleting the data in the time range of the Step width, starting from the data at the oldest time point of the accumulated data (data on the start point side). In step S1510, when it has been determined that the data corresponding to the set range of the Window width has not been accumulated, or when the process in step S1540 has ended, the next measurement data is read and the above processes are repeated.

This routine further includes: step S1550, executed when it has been determined in step S1530 that the statistic amount exceeds the predetermined threshold, of acquiring and recording the starting point data (xₛ, tₛ); and step S1560, executed after step S1550, of ending the detection and stopping reading of the measurement data to end this routine.

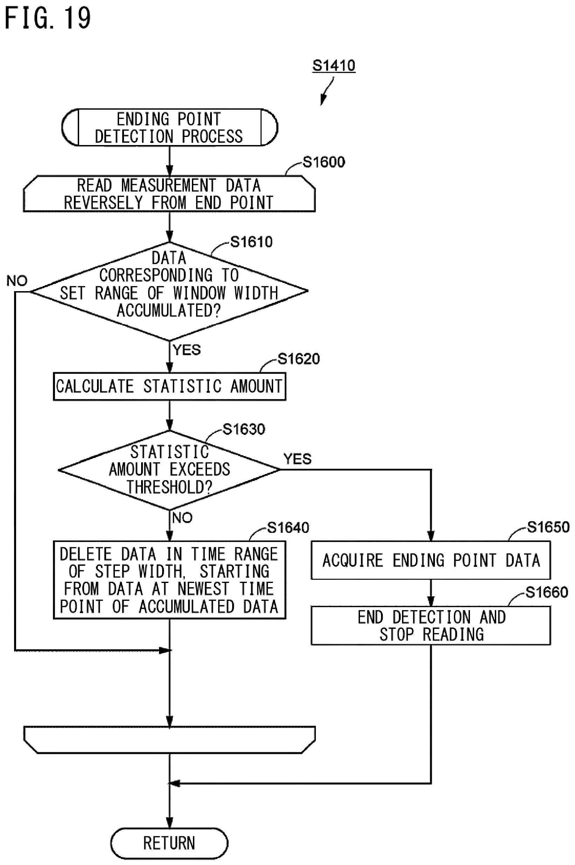

FIG. 19 is a detailed flow of step S1410 in FIG. 17. With reference to FIG. 19, this routine includes step S1600 in which step S1610 to step S1640 described below are repeated while the measurement data (sensor data) is reversely read from the end point. The process repeated in step S1600 includes: step S1610 of determining whether or not data corresponding to the set range of the Window width has been accumulated in a predetermined region in the memory, and of branching the flow of the control in accordance with the determination result; step S1620, executed when it has been determined in step S1610 that data corresponding to the set range of the Window width has been accumulated, of calculating a statistic amount of the data corresponding to the set range of the Window width; step S1630, executed after step S1620, of determining whether or not the calculated statistic amount exceeds a predetermined threshold, and of branching the flow of the control in accordance with the determination result; and step S1640, executed when it has been determined in step S1630 that the statistic amount does not exceed the predetermined threshold, of deleting data in the time range of the Step width, starting from the data at the newest time point of the accumulated data (data on the end point side). When it has been determined in step S1610 that data corresponding to the set range of the Window width has not been accumulated, or when the process in step S1640 has ended, the next measurement data is read and the above processes are repeated.

This routine further includes: step S1650, executed when it has been determined in step S1630 that the statistic amount exceeds the predetermined threshold, of acquiring and recording the ending point data (xₑ, tₑ); and step S1660, executed after step S1650, of ending the detection and stopping reading of the measurement data to end this routine.

In the present embodiment, as described above, the setting unit 1340 includes the detection unit 1342 that detects and sets the starting point and the ending point. While moving the predetermined time range in the sensor data, the detection unit 1342 compares the statistic amount of the data in each time range with a predetermined threshold, and detects the starting point and the ending point, based on whether or not the statistic amount exceeds a predetermined threshold. Accordingly, the starting point and the ending point can be easily detected and set. Therefore, according to the processing system (the processing apparatus 70) of the present embodiment, even when variation has been caused in the output value due to heat generation during machining, the situation during machining can be easily grasped. The other effects are the same as those in the first embodiment.

### (Third embodiment)

The processing system according to the present embodiment is different from the first and second embodiments in that, in the measurement data in which a plurality of pieces of machining-time data during cutting machining are included, a correction range for each piece of the machining-time data is automatically detected.

In the present embodiment, it is assumed that the time corresponding to each piece of the machining-time data, i.e., the time corresponding to one machining, has been inputted as input information to the processing apparatus (terminal apparatus). The Window width (time) and the Step (width) are inputted as setting information, as described in the second embodiment.

### [Software configuration]

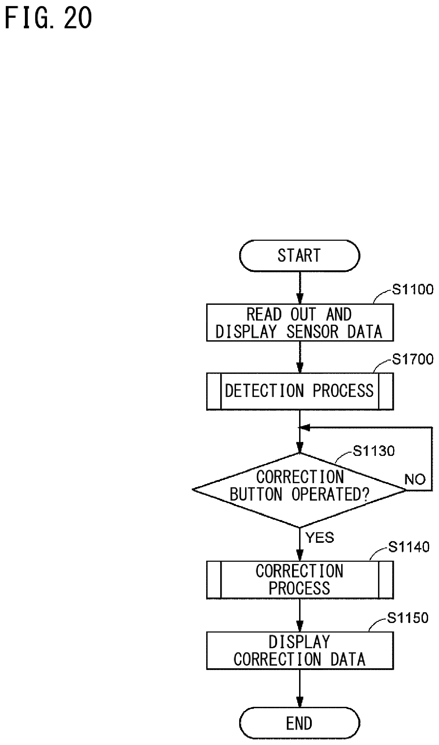

In the processing apparatus according to the present embodiment, the program shown in FIG. 20 is executed instead of the program shown in FIG. 17. The program in FIG. 20 includes step S1700 instead of step S1110 and step S1120 in the program in FIG. 17. The processes in S1100 and step S1130 to step S1150 in FIG. 20 are the same as the processes in the steps shown in FIG. 17. Hereinafter, differences will be described.

With reference to FIG. 20, this program includes step S1700, executed after step S1100, of detecting a correction range (starting point and ending point) of each piece of machining-time data. When the process in step S1700 has ended, the control proceeds to step S1130.

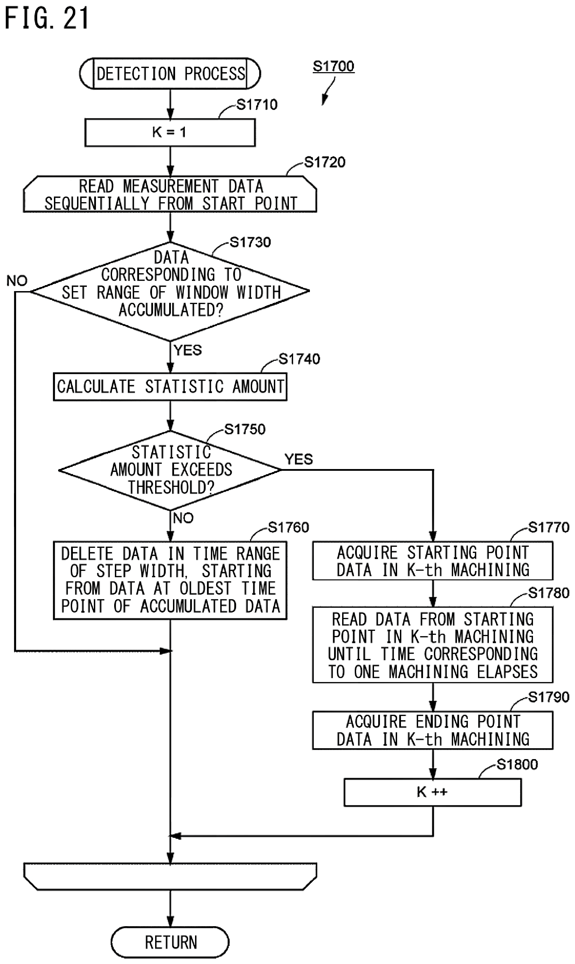

FIG. 21 is a detailed flow of step S1700 in FIG. 20. With reference to FIG. 21, this routine includes: step S1710 of initializing (K=1) a variable K; and step S1720 which is executed after step S1710 and in which step S1730 to step S1800 described below are repeated while measurement data (sensor data) is sequentially read from the start point.

The process repeated in step S1720 includes: step S1730 of determining whether or not data corresponding to the set range of the Window width has been accumulated in a predetermined region in the memory, and of branching the flow of the control in accordance with the determination result; step S1740, executed when it has been determined in step S1730 that data corresponding to the set range of the Window width has been accumulated, of calculating the statistic amount of the data corresponding to the set range of the Window width; step S1750, executed after step S1740, of determining whether or not the calculated statistic amount exceeds a predetermined threshold, and of branching the flow of the control in accordance with the determination result; and step S1760, executed when it has been determined in step S1750 that the statistic amount does not exceed the predetermined threshold, of deleting the data in the time range of the Step width, starting from the data at the oldest time point of the accumulated data (data on the start point side).

The process repeated in step S1720 further includes: step S1770, executed when it has been determined in step S1750 that the statistic amount exceeds the predetermined threshold, of acquiring and recording starting point data (x_{sK}, t_{sK}) in the K-th machining; step S1780, executed after step S1770, of reading data from the starting point in the K-th machining until a time corresponding to one machining elapses; step S1790, executed after step S1780, of acquiring and recording ending point data (x_{eK}, t_{eK}) in the K-th machining; and step S1800, executed after step S1790, of incrementing the variable K.

When it has been determined in step S1730 that data corresponding to the set range of the Window width has not been accumulated, when the process in step S1760 has ended, or when the process in step S1800 has ended, the next measurement data is read and the above processes are repeated. When the above-described process has ended after all the measurement data has been read, this routine ends.

In the present embodiment, as described above, when a plurality of pieces of machining-time data during cutting machining are included in the measurement data, the correction starting point and the correction ending point are set for each piece of machining-time data. Accordingly, the correction process for removing influence of thermal drift is executed for each piece of machining-time data. Therefore, according to the processing system (processing apparatus) of the present embodiment, even when variation has been caused in the output value due to heat generation during machining, the situation during machining can be more easily grasped.

### (Fourth embodiment)

The processing system according to the present embodiment is different from the first embodiment in that sensor data transmitted from the cutting tool is received, and a correction process for removing influence of thermal drift is executed in real time on the received sensor data, whereby correction data obtained through correction is displayed in real time in time series.

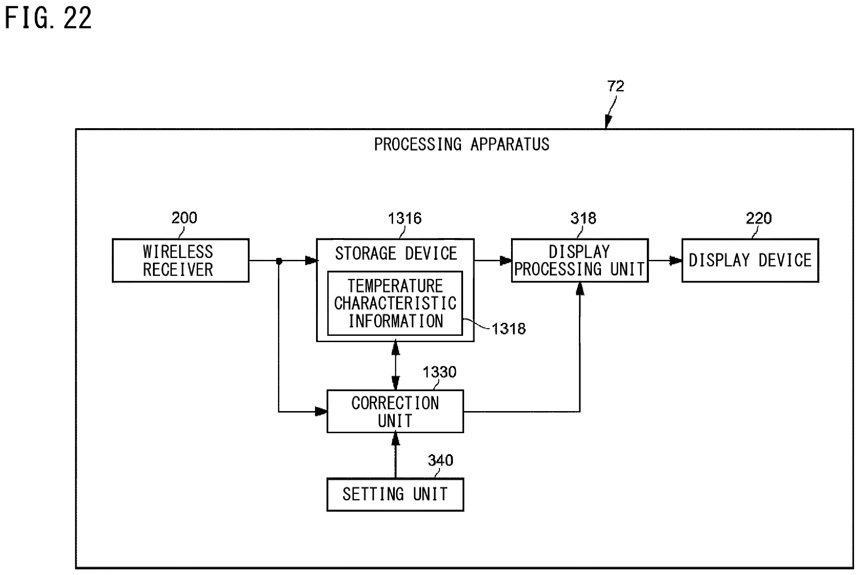

With reference to FIG. 22, the processing system according to the present embodiment includes a processing apparatus 72 instead of the processing apparatus 54 (see FIG. 7). The processing apparatus 72 includes, as function units, a storage device 1316 and a correction unit 1330 instead of the storage device 316 and the correction unit 330 (see FIG. 7), respectively. The storage device 1316 includes a storage region 1318 for storing temperature characteristic information. The processing apparatus 72 may include the setting unit 1340 (see FIG. 14) described in the second embodiment, instead of the setting unit 340 or in addition to the setting unit 340. Further, the processing apparatus 72 need not necessarily include the setting unit 340 and the setting unit 1340.

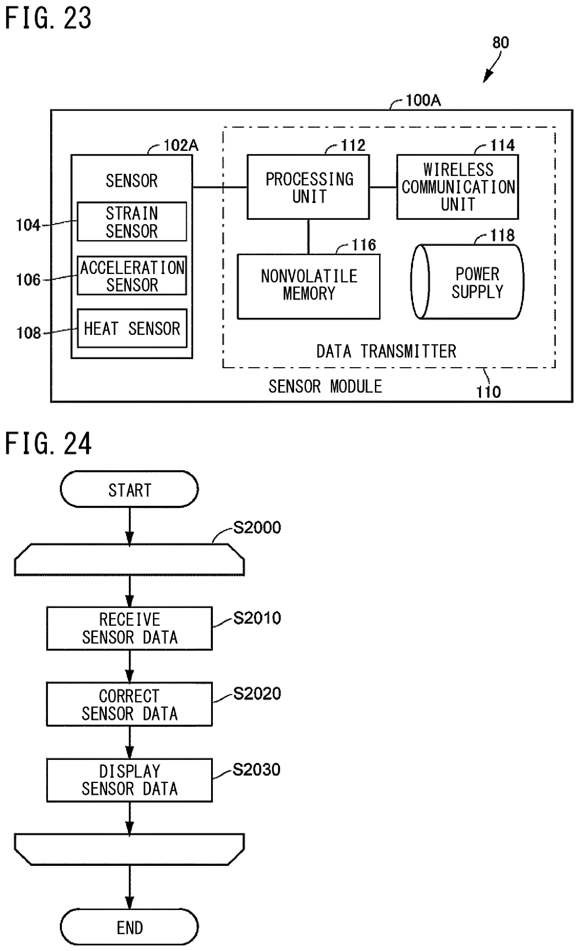

With reference to FIG. 23, the processing system according to the present embodiment includes a cutting tool 80 instead of the cutting tool 52 (see FIG. 1). The cutting tool 80 includes a sensor module 100A. The sensor module 100A includes a sensor 102A instead of the sensor 102 (see FIG. 4). The sensor 102A further includes a heat sensor 108. The heat sensor 108 is provided at a position near the head part inside the holder, for example.

The sensor module 100A causes the sensor data to include the data measured by the heat sensor 108, and transmits the resultant data to the processing apparatus 72.

With reference to FIG. 22 again, the processing apparatus 72 retains in advance, as temperature characteristic information, information associated with temperature information during machining, the strain amount, and the variation component (drift component) of the strain amount caused by heat generation during machining. The temperature characteristic information may be retained for each material of the work material. These pieces of information can be stored in the form of a table, for example.

The correction unit 1330 checks the temperature information and the strain value included in the sensor data against the temperature characteristic information retained in advance, to acquire the drift component of the strain amount, and outputs data from which the drift component has been removed, to the display processing unit 318. In this case, if material information of the work material has been inputted in advance in the processing apparatus 72, the correction unit 1330 can execute the correction process with reference to the temperature characteristic information according to the material of the work material. Accordingly, the correction accuracy is improved.

The display processing unit 318 displays correction data being data obtained through correction performed by the correction unit 1330, on the display device 220 in real time.

### [Software configuration]

With reference to FIG. 24, a control structure of a computer program executed in the processing apparatus 72 in order to receive sensor data transmitted from the cutting tool 80 and display in real time correction data from which influence of thermal drift has been removed, will be described.

This program includes step S2000 in which step S2010 to step S2030 described below are repeated from the start to the end of reception of sensor data. The process repeated in step S2000 includes: step S2010 of receiving sensor data; step S2020, executed after step S2010, of performing a correction process on the received sensor data; and step S2030, executed after step S2020, of displaying sensor data (correction data) obtained through correction, on the display device 220.

In the present embodiment, as described above, with respect to sensor data received by the wireless receiver 200, the correction unit 1330 corrects, in real time, variation in data caused by heat generation during machining using the cutting tool 80. The display processing unit 318 displays, in real time in time series, correction data obtained through correction performed by the correction unit 1330. Accordingly, the situation during machining can be easily grasped in real time.

The sensor data includes temperature information during machining using the cutting tool 80, and the strain amount. The processing apparatus 72 retains, in advance, temperature characteristic information associated with temperature information during machining, the strain amount, and the variation component of the strain amount caused by heat generation during machining. The correction unit 1330 corrects the strain amount (drift component) of the sensor data, based on the temperature information of the sensor data and the temperature characteristic information retained in advance. Accordingly, the variation in data, i.e., influence of thermal drift, caused by heat generation during machining using the cutting tool 80 can be easily corrected in real time.

The correction process according to the present embodiment can be suitably used when heat input during cutting machining is gentle.

### (Fifth embodiment)

The processing system according to the present embodiment is different from the fourth embodiment in that the correction process for removing influence of thermal drift with respect to the received sensor data is executed through filter processing.

In the present embodiment, the component of thermal drift is regarded as short-wavelength waviness, and the waviness in a certain section is calculated by means of a filter to exclude the waviness from the original measurement value, whereby the sensor data is corrected in real time. For calculation of the waviness, a Gaussian filter or the like can be used.

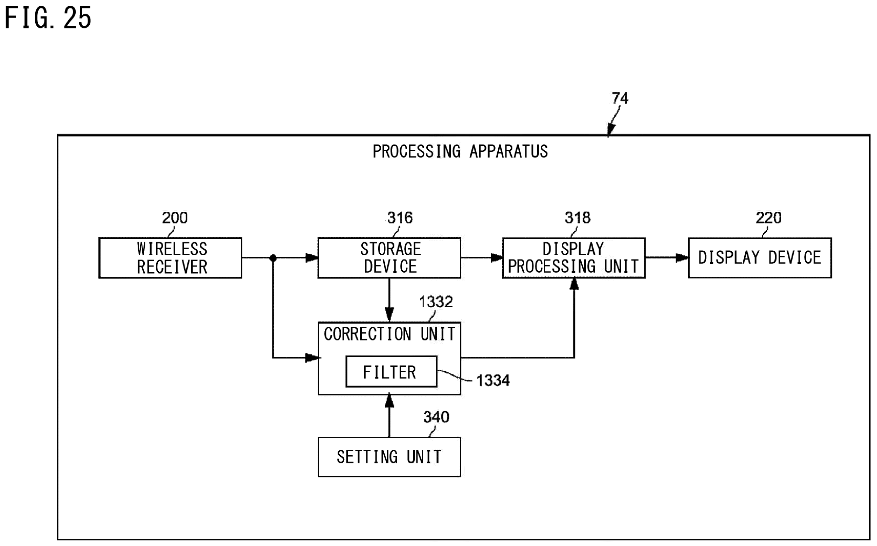

With reference to FIG. 25, the processing system according to the present embodiment includes a processing apparatus 74 instead of the processing apparatus 54 (see FIG. 7). The processing apparatus 74 includes, as a function unit, a correction unit 1332 instead of the correction unit 330 (see FIG. 7). The correction unit 1332 includes a filter 1334. The processing apparatus 74 may include the setting unit 1340 (see FIG. 14) described in the second embodiment, instead of the setting unit 340 or in addition to the setting unit 340. Further, the processing apparatus 72 need not necessarily include the setting unit 340 and the setting unit 1340.

As described above, the correction unit 1332 corrects, in real time through filter processing, variation in data caused by heat generation during machining using the cutting tool. Thus, also with this, variation in data caused by heat generation during machining using the cutting tool can be easily corrected in real time.

The correction process according to the present embodiment can be suitably used when heat input during cutting machining is rapid.

### (Modification)

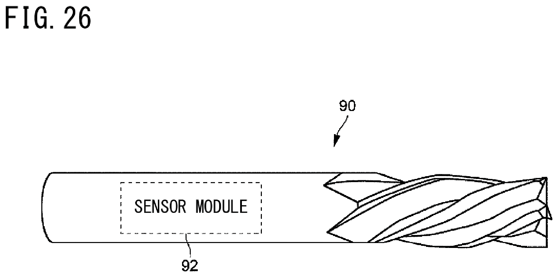

In the above embodiments, an example in which a turning tool is used as an example of the cutting tool has been described. However, the present disclosure is not limited to such embodiments. For example, a rotating tool may be used as the cutting tool. An example of such a cutting tool (rotating tool) is shown in FIG. 26.

With reference to FIG. 26, a cutting tool 90 is a rotating tool for rotating machining and is mounted to a machine tool such as a milling machine. The cutting tool 90 includes a sensor module 92 similar to the sensor modules described in the above embodiments. According to the processing system of the present disclosure, even when such a cutting tool @ is used, variation in the output value due to thermal drift can be removed.

In the above embodiments, an example in which a tool bit is used as the cutting tool has been described. However, the present disclosure is not limited to such embodiments. As the cutting tool, a turning tool other than a tool bit may be used. Further, the processing system of the present disclosure may be configured to use, for example, a grinding tool or a polishing tool other than a cutting tool. In this case, a similar sensor module is also mounted to the grinding tool and the polishing tool. Also in machining using a grinding tool and machining using a polishing tool, the output value of the sensor may vary due to influence of heat generation. Even when such a tool is used, the processing system of the present disclosure exhibits effects similar to the above-described effects. That is, when a tool including a cutting tool, a grinding tool, and a polishing tool is used as a machining tool, it can be said that the processing system, the processing apparatus, and the like of the present disclosure are applicable to machining tools in general that include a sensor.

In the above embodiments, as an example of a sensor influenced by heat generation during machining, a strain sensor has been described. However, the present disclosure is not limited to such embodiments. In a sensor that is influenced by heat generation during machining, i.e., a sensor having temperature characteristics, the same problem that the output value varies will occur. Therefore, the sensor that is mounted to the cutting tool may have any configuration in which a sensor having temperature characteristics is included. Examples of the sensor having temperature characteristics include a crystal sensor.

In the above embodiments, when the sensor data is corrected in real time, the configuration (Method 1) described in the fourth embodiment above and the configuration (Method 2) described in the fifth embodiment above may be combined. In this case, Method 1 and Method 2 may be selectively used depending on change in temperature. For example, when heat input during cutting machining is gentle, the correction process is executed according to Method 1, and when heat input during cutting machining is rapid, the correction process may be executed according to Method 2. Accordingly, when the correction process is executed in real time, correction with higher accuracy can be realized.

In the above embodiments, a processing apparatus including a processing terminal and a wireless receiver that is separate from the processing terminal has been described. However, the present disclosure is not limited to such embodiments. For example, the wireless receiver may be built in the processing terminal.

In the second and third embodiments above, an example in which, after the sensor data has been read out and displayed, the starting point and the ending point are detected, has been described. However, the present disclosure is not limited to such embodiments. For example, after the sensor data is read out and displayed, further, in accordance with the correction button having been operated by the user, the process of detecting the starting point and the ending point may be started.

In the fourth embodiment above, the temperature characteristic information retained in advance by the processing apparatus may be temperature characteristic information of dry machining using no coolant. Further, the temperature characteristic information may include both information in cutting machining using a coolant and information in cutting machining using no coolant. In this case, information as to whether or not a coolant is used in cutting machining may be inputted in advance in the processing apparatus.

The correction process described in the fourth and fifth embodiments above may be performed on the data which has been obtained by reading the sensor data stored in the storage device and is displayed.

In the above embodiments, an example in which the correction button is displayed also on the screen on which the correction data being sensor data obtained through correction is displayed, has been described. However, the present disclosure is not limited to such embodiments. For example, on the screen on which the correction data is displayed, the correction button may be prevented from being displayed, or the correction button may be grayed out so as to be inoperable.

Each process (each function) of the embodiments described above is realized by processing circuitry including one or a plurality of processors. The above processing circuitry may be configured as an integrated circuit or the like in which one or a plurality of memories, various analog circuits, and various digital circuits are combined, in addition to the one or the plurality of processors. The one or the plurality of memories have stored therein a program (command) that causes the one or the plurality of processors to execute the above processes. The one or the plurality of processors may execute the above processes according to the program that is read from the one or the plurality of memories, or may execute the above processes according to a logic circuit that is designed in advance to execute the above processes. The processors may be various processors conforming to control of a computer, such as a CPU, a GPU (Graphics Processing unit), a DSP, an FPGA (Field-Programmable Gate Array), and an ASIC. The plurality of processors physically separated from each other may execute the above processes in cooperation with each other. For example, the processors respectively installed in a plurality of physically separated computers may execute the above processes in cooperation with each other via a network such as a LAN (Local Area Network), a WAN (Wide Area Network), and the Internet. The program may be installed in the memories via the network from an external server device or the like, or may be distributed in a state of being stored in a storage medium such as a CD-ROM (Compact Disc Read-Only Memory), a DVD-ROM (Digital Versatile Disc Read-Only Memory), or a semiconductor memory, and may be installed in the memories from the storage medium.

Embodiments obtained by combining as appropriate the technologies disclosed above are also included in the technological scope of the present disclosure.

The embodiments disclosed herein are merely illustrative and the present disclosure is not limited only to the embodiments described above. The scope of the present disclosure is defined by each claim of the scope of the claims with reference to the above detailed description, and includes meanings equivalent to the wordings described therein and all modifications within the scope of the claims.

### REFERENCE SIGNS LIST

50 processing system
52, 80, 90 cutting tool
54, 70, 72, 74 processing apparatus
60 workpiece
62 machine tool
64, 66 tool rest
92, 100, 100A sensor module
102, 102A sensor
104 strain sensor
106 acceleration sensor
108 heat sensor
110 data transmitter
112 processing unit
114, 202 wireless communication unit
116 nonvolatile memory
118 power supply
150 cutting insert
152 holder
154 head part
156 cutting edge
158 fixing member
200 wireless receiver
204, 310 CPU
206 communication unit
210 keyboard
212 touch pad
220 display device
230 USB memory
232 network
300 terminal apparatus
302 computer
312 ROM
314 RAM
316, 1316 storage device
318 display processing unit
320 input/output I/F
322 USB port
324 network I/F
326 bus
330, 1330, 1332 correction unit
340, 1340 setting unit
342 acceptance unit
400, 402, 404 screen
410, 410a graph
412 correction button
414 Window width input field
416 Step width input field
420 correction starting point
422 correction ending point
1318 storage region
1334 filter
1342 detection unit
D1 non-machining-time data
D2 machining-time data
D3 non-machining-time data

## Claims

1. A processing apparatus comprising:
a reception unit configured to receive sensor data from a sensor provided to a cutting tool;
a correction unit configured to, with respect to the sensor data received by the reception unit, correct variation in data caused by heat generation during machining using the cutting tool; and
a display processing unit configured to display, in time series, correction data being sensor data obtained through correction performed by the correction unit.

2. The processing apparatus according to claim 1, further comprising
a storage device configured to store the sensor data received by the reception unit, wherein
the display processing unit further reads out the sensor data stored in the storage device and displays the sensor data in time series, and
with respect to the sensor data displayed in time series, the correction unit corrects variation in data caused by heat generation during machining using the cutting tool.

3. The processing apparatus according to claim 1 or 2, wherein
the sensor data includes a measurement value measured by the sensor, and
the correction unit corrects variation in data caused by heat generation during machining using the cutting tool, based on a change amount of the measurement value per unit time caused by heat generation.

4. The processing apparatus according to claim 3, wherein
the sensor data includes first non-machining-time data before cutting machining, machining-time data during cutting machining, and second non-machining-time data after cutting machining,
the processing apparatus further includes a setting unit configured to set a starting point for the first non-machining-time data and set an ending point for the second non-machining-time data, and
the correction unit calculates the change amount per unit time, based on the starting point and the ending point set by the setting unit, and corrects variation in data caused by heat generation during machining using the cutting tool, based on the calculated change amount.

5. The processing apparatus according to claim 4, wherein the setting unit includes an acceptance unit configured to accept an input of the starting point and the ending point.

6. The processing apparatus according to claim 4, wherein the setting unit includes a detection unit configured to detect and set the starting point and the ending point.

7. The processing apparatus according to claim 6, wherein, while moving a predetermined time range in the sensor data, the detection unit compares a statistic amount of data in each said time range with a predetermined threshold, and detects the starting point and the ending point, based on whether or not the statistic amount exceeds the predetermined threshold.

8. The processing apparatus according to claim 2, wherein
the display processing unit executes a first display process of displaying, on a display device, a first screen including the sensor data displayed in time series and a correction button,
the correction unit executes a process of correcting the variation on the sensor data, in response to the correction button having been operated, and
the display processing unit further executes a second display process of displaying, on the display device, a second screen including the correction data being sensor data obtained through correction performed by the correction unit.

9. The processing apparatus according to claim 1, wherein
with respect to the sensor data received by the reception unit, the correction unit corrects, in real time, variation in data caused by heat generation during machining using the cutting tool, and
the display processing unit displays, in real time in time series, the correction data obtained through correction performed by the correction unit.

10. The processing apparatus according to claim 9, wherein
the sensor data includes temperature information during machining using the cutting tool, and a strain amount,
the processing apparatus retains, in advance, information associated with temperature information during machining, a strain amount, and a variation component of a strain amount caused by heat generation during machining, and
the correction unit corrects the strain amount of the sensor data, based on the temperature information of the sensor data and the information retained in advance.

11. The processing apparatus according to claim 9, wherein the correction unit corrects, in real time through filter processing, variation in data caused by heat generation during machining using the cutting tool.

12. A processing system comprising:
a cutting tool including a sensor and a transmission unit configured to transmit sensor data from the sensor; and
a processing apparatus configured to receive sensor data transmitted from the cutting tool and execute a predetermined process, wherein
the processing apparatus includes
a reception unit configured to receive sensor data from the sensor provided to the cutting tool,
a correction unit configured to, with respect to the sensor data received by the reception unit, correct variation in data caused by heat generation during machining using the cutting tool, and
a display processing unit configured to display, in time series on a display device, correction data being sensor data obtained through correction performed by the correction unit.

13. A computer program for causing a computer to process sensor data transmitted from a cutting tool, the computer program causing the computer to function as:
a reception unit configured to receive sensor data from a sensor provided to the cutting tool;
a correction unit configured to, with respect to the sensor data received by the reception unit, correct variation in data caused by heat generation during machining using the cutting tool; and
a display processing unit configured to display, in time series on a display device, correction data being sensor data obtained through correction performed by the correction unit.

14. A processing method for processing sensor data transmitted from a cutting tool, the processing method comprising the steps, performed by a computer, of:
receiving sensor data from a sensor provided to the cutting tool;
correcting, with respect to the sensor data received in the receiving, variation in data caused by heat generation during machining using the cutting tool; and
displaying, in time series, correction data being sensor data obtained through correction performed in the correcting.
